# EUROPEAN PATENT SPECIFICATION

(11) **EP 4 555 209 B1**
(45) Date of publication and mention of the grant of the patent: **18.03.2026**
(21) Application number: 23744043.3
(22) Date of filing: 07.07.2023
(51) Int. Cl.: F03D 1/06, B29C 70/52

(54) **A WIND TURBINE BLADE SPAR CAP AND A METHOD FOR MANUFACTURING A WIND TURBINE BLADE SPAR CAP**
HOLMGURT FÜR WINDTURBINENSCHAUFEL UND VERFAHREN ZUR HERSTELLUNG EINES HOLMGURTS FÜR WINDTURBINENSCHAUFEL
CAPUCHON DE LONGERON DE PALE D'ÉOLIENNE ET PROCÉDÉ DE FABRICATION D'UN CAPUCHON DE LONGERON DE PALE D'ÉOLIENNE

(30) Priority: 11.07.2022 DK PA202270375
(43) Date of publication of application: 21.05.2025
(73) Proprietor: VESTAS WIND SYSTEMS A/S, 8200 Aarhus N (DK)
(72) Inventor: GILL, Adrian, 8200 Aarhus N (DK); BERVANG, Anders Greve, 8200 Aarhus N (DK)
(74) Representative: Vestas Patents Department
(86) International application number: PCT/DK2023/050183
(87) International publication number: WO 2024/012642

(56) References cited:
- WO-A1-2020/182908
- DE-A1- 102015 007 801
- US-A1- 2014 241 896

## Description

### Technical field

The present invention relates to a wind turbine blade spar cap, particularly a wind turbine blade spar cap for a horizontal-axis wind turbine. The invention further relates to a method for manufacturing a wind turbine blade spar cap for, e.g., a horizontal-axis wind turbine.

### Background of the invention

As a part of the worldwide transition into renewable energy, there is a demand for wind turbines of increased size and efficiency. Mechanical properties of wind turbine blades, however, impose limitations on the size of the blades and thus on the power output of wind turbines. During use, wind turbine blades are subject to static and dynamic loads incurred by the wind acting on the blades, i.e., aerodynamic loads, as well as gravitational loads.

Loads induced by wind acting on a wind turbine blade are generally referred to as flapwise loads, and loads induced by gravity are generally referred to as edgewise loads. During use of the blade, its pressure side is generally subjected to tension, and its suction side is generally subjected to compression. Flapwise loads may be resisted by an internal shear web in the blade, whilst the leading and trailing edges of the blade carry the edgewise bending loads.

Spar caps may be embedded in or attached to the suction side and pressure side shells at attachment zones for the shear webs. The spar caps may provide enhanced tensile or compressive strength. Spar caps may include longitudinally aligned filaments integrated in, e.g., pultruded elements which may be designed to handle a certain predetermined level of tensile and compressive loads. The tensile properties of filaments are higher than their compressive properties, and the compressive strength may therefore by a limiting property in the design of spar caps. Hitherto, development of spar caps including fibre-reinforced resin structures has focused on the geometrical configuration of, e.g., sandwich constructions of multiple fibre-reinforced elements, optimization of interfaces between spar caps and shear webs, as well as on maximizing the volumetric fibre filament content in fibre-reinforced elements.

DE102015007801 describes a method for the manufacture of a component of a rotor blade in which at least one pultruded strip with two opposing support sides is coated with a tear-off peel ply on at least one of the support sides and the peel ply is torn off from at least one support side to form flow channels.

### Summary of the invention

On the above background, it is an object of preferred embodiments of the invention to provide a wind turbine blade spar cap with improved properties, such as improved compressive strength. It is a further object of preferred embodiments of the invention to provide a spar cap which balances compressive and tensile properties of the spar cap. It is a further object of preferred embodiments of the invention to provide a simple and efficient method for manufacturing such a spar cap.

In a first aspect, the invention provides a wind turbine blade spar cap comprising a fibre-reinforced resin structure comprising fibre tows, wherein at least some of said fibre tows comprise:
a first group of longitudinally aligned first filaments, each of which defines a first cross section; and
a second group of longitudinally aligned second filaments, each of which defines a second cross section,
wherein the first cross section is different from the second cross section.

The present invention sets out from the insight that the compressive and tensile properties of spar caps are influenced by the geometrical configuration of the filaments themselves. The provision of separate groups of different filaments in one or more fibre tows may provide improved compressive properties of the wind turbine blade spar cap without compromising tensile properties to an unacceptable degree.

According to the invention, within an individual fibre tow there is a group of first filaments and a group of second filaments. The cross section of the filaments of the first group have a different cross section to the filaments of the second group.

Since the compressive properties of spar caps may imposes the limits on spar cap construction, it is possible to sacrifice a proportion of the tensile properties to improve the compressive properties to obtain an improved overall balance of compressive and tensile properties.

Preferably, the fibre tows are carbon tows, and the first filaments are carbon filaments and the second filaments are carbon filaments.

The provision of filaments with different cross sections within a tow may increase thresholds for fractures and other critical failures. More specifically, in a carbon tow with carbon filaments of equal cross sections, a fracture may likely occur throughout the carbon tow once the individual filaments start to break. In a tow comprising carbon filaments of different cross sections, a fracture which starts developing in individual filaments of the tow is more likely not to propagate through the tow and/or fibre-reinforced structure before the fracture becomes critical.

Additionally, the provision of different cross sections permits a more dense packing of the individual filaments in the fibre tow, as spaces between filaments of a large cross section may be filled with filaments of a smaller cross section. Thus, the volumetric filament content of the tow may be increased as compared to tows comprising filaments of equal cross sections. The fibre tow's diameter may thus be decreased which in turn may result in decreased spar cap dimensions and savings in terms of resin, and mechanical properties may be enhanced due to the higher filament content in the tows and thus in the fibre reinforced resin structure.

Moreover, filaments with different cross sections may advantageously ensure that the filaments have different degrees of carbonization, which in turn may further improve mechanical properties and fracture properties of a fibre tow.

The present invention is not limited to fibre tows having just two groups of filaments. Generally, embodiments of the invention may have any number of groups of filaments. Each of such several groups may for example have different cross sections, such as cross sections of different shape and/or of different size. For example, in embodiments of the invention, each of at least some of the fibre tows comprises a third group of longitudinally aligned third filaments, each of which defines a third cross section, wherein the third cross section is different from the first cross section and the second cross section. More than two groups of filaments may further improve mechanical properties and fracture properties of a fibre tow. Preferably, the third filaments are carbon filaments.

In the present context, the notion "longitudinally aligned" refers to the longitudinal direction of the fibre tow, i.e., its lengthwise direction. The fibre reinforced resin structure may be provided in the form of a pultruded element and/or in a woven or non-woven structure.

Typically, each fibre tow according to embodiments of the invention may, for example, comprise from 100 to 200,000 filaments, such as from 12,000 to 50,000 filaments.

A filament may alternatively be referred to as a fibre filament. A carbon fibre may comprise or consist of carbon fibre. A structure reinforced by carbon filament may thus be understood as a fibre-reinforced structure or a carbon-reinforced structure.

In embodiments of the invention, the first cross section defines a first-cross-sectional area, and the second cross section defines a second cross-sectional area, wherein the first cross-sectional area is larger than the second cross-sectional area.

In this context, the first cross section area may be understood as the area of the first cross section of a first filament of the first group. Analogously, the second cross section area may be understood as the area of the second cross section of a second filament of the second group.

Generally, the provision of different cross-sectional areas is a simple and efficient way of implementing different cross sections. Such different areas may particularly ensure further improved mechanical properties and fracture properties of a tow.

In embodiments of the invention, the first cross-sectional area is from 50 square micrometres to 200 square micrometres, for example from 55 square micrometres to 100 square micrometres, such as from 60 square micrometres to 120 square micrometres. The second cross-sectional area may be from 10 square micrometres to 50 square micrometres, for example from 20 square micrometres to 45 square micrometres, such as from 30 square micrometres to 40 square micrometres.

The above-exemplified combinations of cross-sectional areas may ensure a proper balance of mechanical properties of the fibre tow, as well as ensure an improved packing of filaments.

In embodiments of the invention, said first cross section defines a first cross-sectional shape, and the second cross-section defines a second cross-sectional shape, wherein the first cross-sectional shape is different from the second cross-sectional shape.

As an alternative or an addition to different cross-sectional areas, different groups of filaments may have different cross-sectional shapes. The different shapes of the groups may for example be any of circular shapes, elliptical shapes, bean shapes, irregular shapes, and polygon shapes. Polygon shapes may for example be triangular shapes, tetragonal shapes, pentagonal shapes, hexagonal shapes, etc. Differently shapes cross sections may contribute to improved packing of filaments in the fibre tow.

In embodiments of the invention, said first group constitutes at least 30 percent of a total cross-sectional area of each of the fibre tows, for example at least 35 percent, for example at least 40 percent, such as at least 45 percent.

In embodiments of the invention, said second group constitutes at least 30 percent of a total cross-sectional area of each of the fibre tows, for example at least 35 percent, for example at least 40 percent, such as at least 45 percent.

Note that the above-mentioned total cross-sectional areas relate to the parts of the cross-section of a fibre tow formed by filaments. It does thus not include gaps between filaments of the fibre tow. In a wind turbine blade spar cap, fibre tows are saturated with resin, which may, at least partly, fill such gaps. In the present context, such gaps should not be considered part of the total cross-sectional area of the fibre tows. In other words, only filaments contribute to the "total cross-sectional area".

The respective percentages of the first and second groups of filaments may be tailored to meet the desired balance between tensile and compressive properties.

The above percentages of filaments in the cross sections of the first and second groups may be beneficial with respect to compensating for the smaller areas of the individual cross sections of filaments of one of the groups, i.e. to compensate by the inclusion of relatively more filaments in the other group.

In embodiments of the invention, the fibre tows form part of a pultruded element of said wind turbine blade spar cap. Pultrusion is a process well-known *per se,* in which the tows are pulled through a die while being saturated with a resin. A perfect longitudinal alignment of the filaments is thereby achieved, resulting in improved mechanical properties.

In embodiments of the invention, all of the fibre tows have the same total cross-sectional area.

Whilst all of the fibre tows may have the same cross-sectional area, the cross-sections of the individual filaments within the fibre tow may still be different. The provision of fibre tows of equal cross-sectional areas may facilitate handling of the tows in a subsequent manufacturing step, such as pultrusion of tows to form a pultruded element, and/or filament-lay up to form a preform or a woven fabric. The provision of fibre tows of equal cross sections may further contribute to achieving homogeneous compressive and tensile properties. In the case of pultrusion, it is beneficial for the fibre tows to have the same cross sectional area so that they can be easily pulled into a pultrusion die.

In a second aspect, the present invention provides a method for manufacturing a wind turbine blade spar cap, said method comprising the steps of:
transferring a liquid through a first set of nozzle apertures to form a first group of filaments and through a second set of nozzle apertures to form a second group of filaments, wherein each of the nozzle apertures of said first set have first cross-sectional openings, and each of the nozzle apertures of said second set have second cross-sectional openings, wherein the first and second cross-sectional openings are differently sized and/or differently shaped;
processing said first group of filaments and said second group of filaments to form a first group of filaments and a second group of filaments;
bundling said first group and said second group of filaments to form a fibre tow comprising said first group and said second group of filaments, wherein filaments of said first group and said second group are longitudinally aligned; and
integrating said fibre tow in a resin structure of said wind turbine blade spar cap.

The method provides a simple and efficient procedure for manufacturing a wind turbine blade spar cap according to the first aspect of the invention.

The method in particular provides a procedure for manufacturing a multi-component fibre tow from a single source of raw material (i.e. the liquid). The fibre tow may be manufactured using a single nozzle plate, i.e. spinneret, in which the sets of nozzle apertures are disposed. The tow comprising filaments of different cross sections may thus be manufactured in an inexpensive and rapid manner.

Preferably the fibre tow is a carbon tow, and the first group of filaments are carbon filaments and the second group of filaments are carbon filaments.

The liquid is the raw material that is transferred through the nozzle apertures to form the filaments. For the manufacture or carbon filaments or natural filaments, the liquid is referred to as 'dope', or as a 'precursor'. For the manufacture of glass filaments, the liquid is referred to as 'melt'.

In the case of carbon filaments, examples of applicable precursors include polyacrylonitrile, rayon, petroleum pitch, and compositions thereof.

In the case of carbon filaments ,the processing step preferably includes carbonization of the precursor in a manner known *per se.* During carbonization, the precursor may be drawn into filaments which are heated without allowing the precursor to come into contact with oxygen. In the absence of oxygen, the filament does not burn. As a result of heating, a filament composed of long, interlocked chains of carbon atoms is left, with none or only few non-carbon atoms remaining.

The cross-sectional areas and shapes of the filaments of the tows are parameters which can be varied to optimize one or more properties of the fibre tow and thus of the wind turbine blade spar cap manufactured by the method according to the invention. These parameters may be controlled by adequate selection of the sizes and shapes of the nozzle apertures. The exact area and shape of the nozzle apertures may not perfectly match the area and shape of the filaments manufactured therefrom, since carbonization typically involves removal of material. Nevertheless, size and shape variations of the apertures are at least partly transferred into varying sizes and shapes of the filaments in the resulting fibre tow. Compensation for changes in sizes and/or shapes of filaments in consequence of carbonization may be compensated for by selection of the sizes and/or shapes of the nozzle apertures.

Embodiments of the invention may employ any number of sets of nozzle apertures. Such several sets of nozzle apertures may for example define different cross-sectional sizes and/or shapes. For example, in one embodiment of the invention, the liquid is transferred through a third set of nozzle apertures to form a third set of filaments, wherein the nozzle apertures of the third set have third cross-sectional sizes and/or shapes different from the cross-sectional shapes and/or sizes of the first and/or second set of nozzle apertures. Thus, the first cross-sectional openings, the second cross sectional openings, and the third cross-sectional openings may be differently sized and/or differently shaped, and the processing step may accordingly comprise processing the third group of filaments to form a third group of filaments, in which case the bundling step may comprise bundling said first group, said second group, and said third group of filaments to form said fibre tow, wherein filaments of said first group, said second group, and said third group are longitudinally aligned. Preferably, the third group of filaments are carbon filaments.

In embodiments of the invention, the processing step comprises heating the first group of filaments and the second group of filaments to obtain different degrees of carbonization for the filaments of the first group and the filaments of the second group, respectively.

The first group of filaments and said second group of filaments may be subjected to the same or different temperatures during said processing step. Different degrees of carbonization may result in different relative fractions of carbon atoms in the resulting filaments.

A filament with a large cross-sectional area typically has a smaller degree of carbonization than a filament with a small cross-sectional area, if they are subjected to the same heating process.

Heating, particularly simultaneous heating, is a simple and efficient procedure for obtaining different degrees of carbonization of carbon filaments of varying sizes and/or shapes in a carbon tow, which in turn may advantageously provide improved mechanical properties and fracture properties of the resulting carbon tow and wind turbine blade spar cap.

In embodiments of the invention, each of the first cross-sectional openings defines a first cross-sectional area, and the second cross-sectional-openings defines a second cross-sectional area, wherein the first cross-sectional area is larger than the second cross-sectional area.

Different cross-sectional openings may advantageously be employed to efficiently manufacture fibre tows with differently sized filaments in wind turbine blade spar caps in order to achieve the effects disclosed herein in the context of the spar cap of the first aspect of the invention.

In embodiments of the invention, the first set and said second sets of nozzle apertures are disposed in a nozzle head, wherein the second set constitutes at least 30 percent of a total opening area provided by the first and second cross-sectional openings, for example at least 35 percent, for example at least 40 percent, such as at least 45 percent.

In embodiments of the invention, the first set constitutes at least 30 percent of the total opening area, for example at least 35 percent, for example at least 40 percent, such as at least 45 percent.

The proportion of the resulting groups of filaments in the fibre tow resulting from the processing step is approximately equal to the above respective opening percentages. Thus, the proportion of the respective groups of fibre tows may conveniently be accomplished by designing the nozzle apertures in, e.g., a spinneret.

The wind turbine blade spar cap manufactured by the method of the second aspect of the invention may be a spar cap according to the first aspect of the invention and may include any feature thereof as disclosed herein.

In a third aspect, the invention provides the use of at least one fibre tow for balancing compressive and tensile properties in a wind turbine blade spar cap, wherein said at least one fibre tow comprises a first group of longitudinally aligned filaments, each of which has a first cross section, and a second group of longitudinally aligned filaments, each of which has a second cross section, wherein the first cross section is different from the second cross section. Preferably, the fibre tow is a carbon fibre tow and the filaments are carbon filaments.

In a fourth aspect, the invention provides the use of a first group of longitudinally aligned filaments and a second group of longitudinally aligned caron filaments in a fibre tow in a resin structure of a wind turbine blade spar cap for reducing filament gaps between filaments of said fibre tow, wherein filaments of said first group individually have first cross sections and filaments of said second group individually have second cross sections, wherein said first cross sections are different from said second cross sections. Preferably, the fibre tow is a carbon fibre tow and the filaments are carbon filaments.

In an additional independent aspect the invention provides a nozzle head for fibre tow manufacturing, said nozzle head comprising:
a first set of nozzle apertures individually having first cross-sectional openings; and
a second set of nozzle apertures individually having second cross-sectional openings,
wherein said first cross-sectional openings are individually larger than said second cross-sectional openings, wherein said second set constitute at least 30 percent of a total opening area of said first cross-sectional openings and said second cross-sectional openings, for example at least 35 percent, for example at least 40 percent, such as at least 45 percent.

In examples of the above exemplified nozzle head, the first set constitutes at least 30 percent of said total opening area, for example at least 35 percent, for example at least 40 percent, such as at least 45 percent.

In examples of the above exemplified nozzle head, the first and second cross-sectional openings are differently shaped.

In an additional independent aspect the invention provides the use of the above-exemplified nozzle head in fibre tow manufacturing. The fibre tow thus manufactured may be employed in a wind turbine blade spar cap, notably in a wind turbine spar cap according to the invention.

An additional aspect of the invention relates to a wind turbine blade comprising a wind turbine blade spar cap, wherein said wind turbine blade spar cap comprises a fibre-reinforced resin structure comprising fibre tows, wherein each of at least some of said fibre tows comprise:
a first group of longitudinally aligned first filaments, each of which defines a first cross section; and
a second group of longitudinally aligned second filaments, each of which defines a second cross section,
wherein the first cross section is different from the second cross section.

The spar cap of the above-exemplified wind turbine blade may be any of the spar caps of this disclosure.

### Brief description of the drawings

Embodiments of the invention will now be further described by reference to the accompanying drawings, in which:
Fig. 1 illustrates a horizontal-axis wind turbine comprising three wind turbine blades,
Fig. 2 illustrates a perspective view of a wind turbine blade,
Fig. 3 illustrates a cross section of a wind turbine blade comprising wind turbine blade spar caps,
Fig. 4 illustrates a wind turbine blade spar cap according to an embodiment of the invention,
Fig. 5 illustrates a part of a fibre tow,
Fig. 6a-b illustrate exemplary cross sections of a fibre tows according to the invention,
Fig. 7 illustrates method steps according to an embodiment of the invention, and
Fig. 8 illustrates an exemplary nozzle head which may for example be used in manufacturing according to the invention.

### Detailed description of the drawings

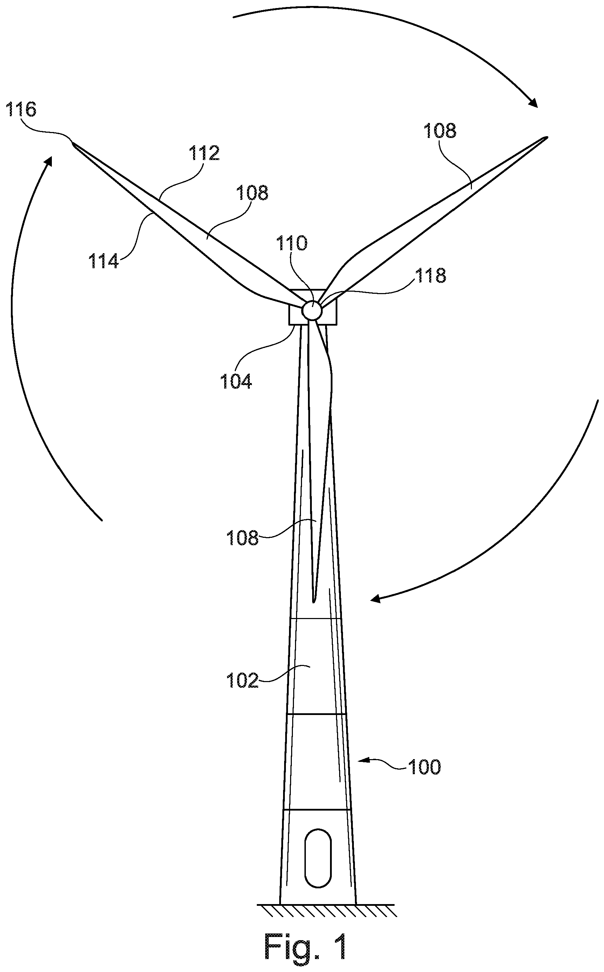

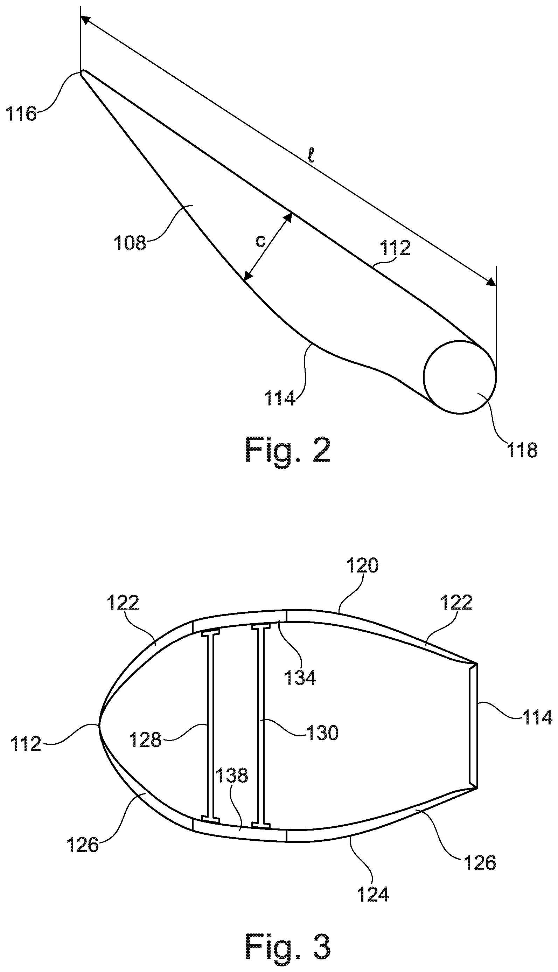

Fig. 1 illustrates a horizontal-axis wind turbine 100 comprising three wind turbine blades 108. Fig. 2 illustrates a perspective view of a single wind turbine blade 108.

The blades 108 constitute a rotor of the wind turbine connected to a main shaft at a hub 110. The wind turbine 100 includes a tower 102 and a nacelle 104 at the upper end of the tower. Each blade 108 has a root end 118, a tip end 116, a leading edge 112 and a trailing edge 114. The blade has a total length ℓ from the root 118 to the tip 116. At any position between the root 118 and the tip 116, the chord length c is defined as the shortest straight-line distance between the leading edge 112 and the trailing edge 114. As shown in Fig. 2, the chord length may vary along the length of the blade to take into account the fact that the aerodynamics and internal mechanical forces vary along the length of the blade 108. Further, the blade may be twisted along its length and the aerodynamic profile of the blade in a chordwise cross sectional view may vary along the length of the blade. At the root 118, the profile is typically circular, and along the longitudinal direction away from the root, the cross section of the blade smoothly transitions into an aerodynamic profile. At its root 118 the blade may be mounted to a pitch-regulating device for controlling the pitch of the blade, i.e. its rotation around a longitudinal axis extending in the lengthwise direction of the blade.

During operation of the wind turbine 100, the gravitational pull and the aerodynamics induce loads on the wind turbine blades 108. Additionally, in a pitch-controlled wind turbine, varying pitch angles induce varying loads to the blades 108. These loads dictate certain tensile and compressive properties of the individual blades to be taken into account in manufacturing of the blades 108.

Fig. 3 illustrates a cross section of a wind turbine blade comprising wind turbine blade spar caps 134,138. These spar caps 134,138 are load-bearing structures, which are integrated in the wind turbine blade for, e.g., structural solidity. The blade has a suction side 120 and a pressure side 124, having a suction side shell 122 and a pressure side shell 126, respectively. These shells 122,126 are joined at the leading edge 112 and at the trailing edge 114.

In this exemplary wind turbine blade, one wind turbine blade spar cap 134 is integrated in the suction side shell 122, and another spar cap 138 is integrated in the pressure side shell 126. Integration of spar caps is not limited to these exemplary locations. Further, a wind turbine blade may have more than two spar caps, for example three spar caps, four spar caps, five spar caps, six spar caps, or even more than six spar caps.

Internally, the two spar caps 134,138 are interconnected by shear webs 128,130, which at least partly carry the blade loads.

The cross section of a wind turbine blade typically changes along the longitudinal axis of the blade as indicated in the illustration of Fig. 2.

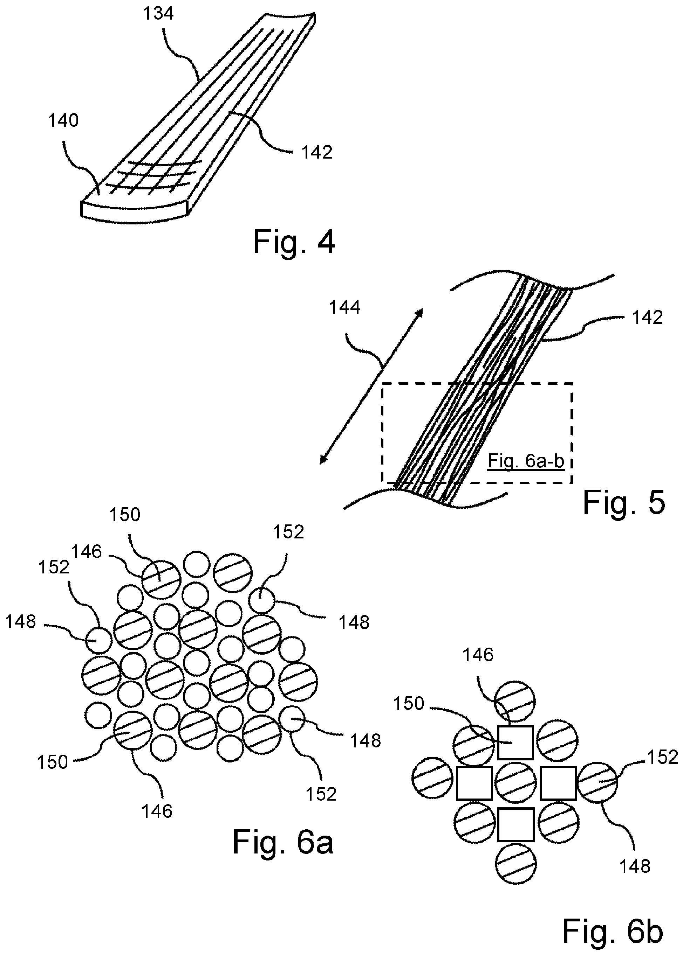

Fig. 4 illustrates a wind turbine blade spar cap 134 according to an embodiment of the invention.

The spar cap 134 may have a flat rectangular shape, and it may have a slight curvature to corresponding to the surface/shell curvature of a wind turbine blade. The spar cap 134 extends longitudinally in a lengthwise direction of the blade.

The spar cap 134 comprises a fibre-reinforced resin structure comprising fibre tows 142. In this particular embodiment, the spar cap 134 comprises a plurality pultruded elements formed from fibre tows 142. In another embodiment the spar cap comprises woven or non-woven fibre tows, stacked on top of each other in a direction transverse to the chord-wise direction of the blade (vertical direction in the illustration).

The scope of the invention is not limited to any particular type of arrangement of fibre tows. Generally, the fibre tows may be provided in any suitable manner, for example as pultruded elements, in the form of woven or non-woven mats/fabrics, or as unidirectional filaments.

The filaments provide reinforcement of a cured resin 140, whereby the spar cap 134 provides the intended mechanical stability and strength.

In the illustrated embodiment, each of the fibre tows 142 comprises a first group of longitudinally aligned first filaments and a second group of longitudinally aligned filaments. Each of the first filaments has a first cross section, and each of the second filaments has a second cross section, in which the first cross section is different from the second cross section. In particular, the first cross section has a first cross-sectional area, and the second cross section has a second cross sectional area, and in this embodiment, the first cross-sectional area is larger than the second cross-sectional area.

Such different cross-sectional areas may ensure a proper balance of mechanical properties of the fibre tow, and thus of the spar cap.

The fibre tows are preferably carbon fibre tows, and the first filaments and the second filaments are preferably carbon filaments. However, the tows may be formed from e.g. glass, basalt or natural fibres in other examples.

In one embodiment, the first cross-sectional area is 80 square micrometres and the second cross-sectional area is 35 square micrometres, corresponding to diameters of approximately 10 micrometres and 7 micrometres, respectively, given circular cross-sections. Each fibre tow comprises approximately 12,000 first filaments and 20,000 second filaments. The filaments may be based on a polyacrylonitrile precursor.

Fig. 5 illustrates a part of a fibre tow 142, such as the fibre tows of the embodiment of Fig. 4. The fibre tow 142 comprises different groups of filaments, which are all aligned along the longitudinal direction 144 of the fibre tow 142.

In typical fibre tows, the cross-sectional shape of the entire tow is not entirely circular, but resembles a highly eccentrical elliptical shape (i.e. a flat elliptical shape). The fibre tows may have any cross-sectional shape.

Fig. 5 further illustrates a cross-sectional sectional plane of the fibre tow 142, as shown in detail in Figs. 6a-b.

Figs. 6a and 6b illustrate distinct examples of a fibre tow with different groups of longitudinally aligned filaments. A typical fibre tow comprises thousands of individual filaments. Further, in typical fibre tows, the individual filaments are often more irregularly ordered than what is schematically depicted in Figs. 6a and 6b.

In the example of Fig. 6a, the illustrated cross section of a fibre tow features first filaments 146 and second filaments 148. Each of the first filaments 146 has a first cross section 150 having a first cross-sectional area and a first cross-sectional shape, and each of the second filaments 148 has a second cross section 152 having a second cross-sectional area and a second cross-sectional shape. The first cross-sectional area is larger than the second cross-sectional area. Both the first cross-sectional shape and the second cross sectional shape are circular. Further, in this example there are approximately twice as many second filaments 148, in comparison with the number of first filaments 146. The entire fibre tow may, for example, comprise 5,000 first filaments and 10,000 second filaments.

In the example of Fig. 6b, the illustrated cross section of a fibre tow features first filaments 146 and second filaments 148. Each of the first filaments 146 has a first cross section 150 having a first cross-sectional area and a first cross-sectional shape, and each of the second filaments 148 has a second cross section 152 having a second cross-sectional area and a second cross-sectional shape. The first cross-sectional shape is rectangular, and the second cross-sectional shape is circular. The entire fibre tow may, for example, comprise 15,000 first filaments and 15,000 second filaments.

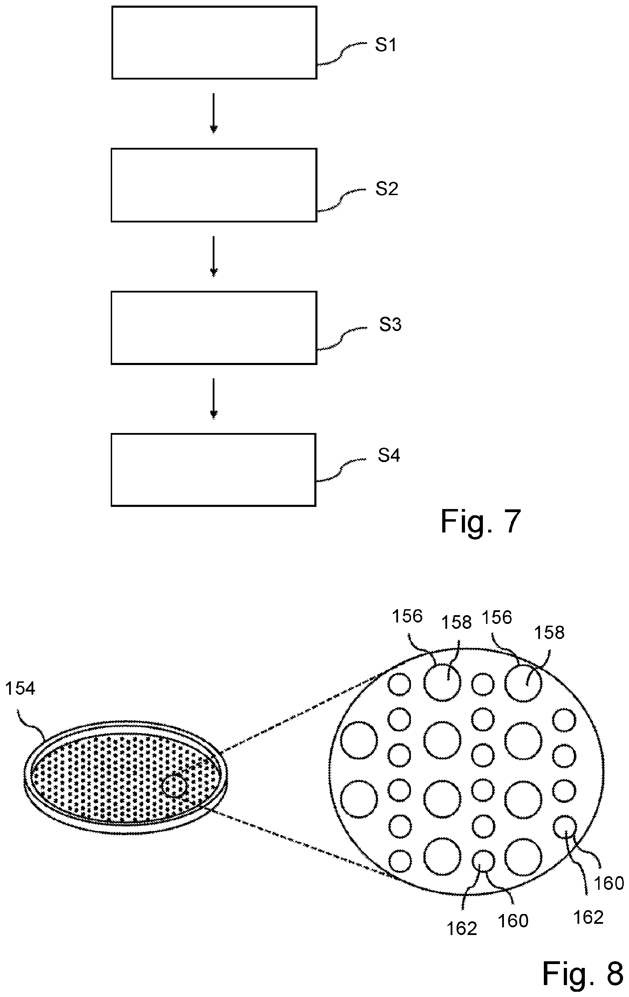

Fig. 7 illustrates method steps S1-S4 according to an embodiment of the invention. The embodiment relates to a method of manufacturing a wind turbine blade spar cap.

In a first step S1 of the method, a liquid, e.g. a dope or precursor is transferred through a first set of nozzle apertures to form a first group of filaments and through a second set of nozzle apertures to form a second group of filaments. Each of the nozzle apertures of the first set have first cross-sectional openings, and each of the nozzle apertures of the second set have second cross-sectional openings. The first cross-sectional openings and the second cross-sectional openings are differently sized and/or differently shaped.

In a next step S2, the first group of filaments and the second group of filaments are processed to form a first group of filaments and a second group of filaments. This processing step may, for example, comprise heating the first and second group of filaments to accomplish carbonization of the filaments to produce carbon filaments. The heating may for example be performed at a temperature from 200 degrees Celsius to 3,000 degrees Celsius, such as at 1,000 degrees Celsius, preferably in an oxygen-free environment. Processing may comprise several distinct heating steps, such as a stabilizing heating step at 250 degrees Celsius for 60 minutes to obtain a thermally stable ladder bonding in the filaments prior to performing a carbonizing heating step at 2,000 degrees Celsius in an oxygen-free environment.

In a next step S3, the first group of filaments and the second group of filaments are bundled to form a fibre tow comprising the first group of filaments and the second group of filaments. The first group of filaments and the second group of filaments are bundled in the fibre tow such that the filaments of the first group and of the second group are longitudinally aligned in the tow.

In a next step S4, the fibre tow is integrated in a resin structure of the wind turbine blade spar cap. In some embodiments, the step of integration is performed via pultrusion of multiple fibre tows being pulled through a resin bath and a heated die for curing the resin. Alternatively, the fibre tow may be moulded into the resin. In such examples, from 50 to 250 fibre tows may typically be used, for example 150 fibre tows for a pultrusion with crosswise dimensions of 100 mm x 5 mm.

The method according to the present invention is not limited to the above-exemplified method steps of production. In some embodiments, manufacturing may further comprise steps of subjecting the filaments to one or more substances in gaseous or liquid form to appoint various additional properties to the finalized filaments, to ensure, for example, that the filaments bond chemically or mechanically, or to protect them during winding or weaving. In some embodiments, manufacturing may further comprise a step of weaving the fibre tow with other fibre tows to form a fibre tow mat, prior to integrating the fibre tow in the resin structure of the wind turbine blade spar cap.

Fig. 8 illustrates an exemplary nozzle head, i.e. "spinneret", 154 for in manufacturing of fibre tows.

The nozzle head 154 is flat and circular, with a rim for integration into fibre tow manufacturing apparatus.

The nozzle head 154 comprises nozzle apertures 156,160, which are small holes through which liquid may be transferred to form filaments for a fibre tow. The nozzle head 154 has a first set of nozzle apertures 156 and a second set of nozzle apertures 160, having first cross sectional openings 158 and second cross-sectional openings 162, respectively. The first cross-sectional openings are individually larger than the second cross-sectional openings. However, there are more second nozzle apertures 160 than first nozzle apertures. Thus, the first set of nozzle apertures constitute at approximately 50 percent of a total opening area of the first cross-sectional openings, and the second set of nozzle apertures constitute approximately 50 percent of the total opening area. Here, the total opening area is the sum of all cross-sectional openings 158,162 of the first and the second sets of the nozzle head 154.

The nozzle head may, for example, be made from a metallic material, a non-metallic material, or a combination thereof. For example, steel, a ceramic material, or a plastic material may be used. The numbers and sizes of apertures may be chosen to match the properties of the fibre tow required to be manufactured via the nozzle plate.

Various versions and elements of the invention have been exemplified for the purpose of clarification rather than limitation. Well-known details of methods and systems have been omitted to not obscure the content of the disclosure with redundancy. Various elements and features of the invention and this disclosure may be combined in any way possible within the scope of the claims.

## Claims

1. A wind turbine blade spar cap (134) comprising a fibre-reinforced resin structure comprising fibre tows (142), wherein at least some of said fibre tows comprise:
a first group of longitudinally aligned first filaments (146), each of which defines a first cross section (150); and
a second group of longitudinally aligned second filaments (148), each of which defines a second cross section (152),
wherein the first cross section (150) is different from the second cross section (152).

2. A wind turbine blade spar cap according to claim 1, wherein said first cross section (150) defines a first-cross-sectional area, and wherein said second cross section (152) defines a second cross-sectional area, wherein the first cross-sectional area is larger than the second cross-sectional area.

3. A wind turbine blade spar cap according to claim 1 or 2, wherein the first cross-sectional area is from 50 square micrometres to 200 square micrometres, for example from 55 square micrometres to 100 square micrometres, such as from 60 square micrometres to 120 square micrometres, and wherein the second cross-sectional area is from 10 square micrometres to 50 square micrometres, for example from 20 square micrometres to 45 square micrometres, such as from 30 square micrometres to 40 square micrometres.

4. A wind turbine blade spar cap according to any of the preceding claims, wherein said first cross section (150) defines a first cross-sectional shape, wherein said second cross-section (152) defines a second cross-sectional shape, wherein the first cross-sectional shape is different from the second cross-sectional shape.

5. A wind turbine blade spar cap according to any of the preceding claims, wherein said first group constitutes at least 30 percent of a total cross-sectional area of the fibre tows (142), for example at least 35 percent, for example at least 40 percent, such as at least 45 percent.

6. A wind turbine blade spar cap according to any of the preceding claims, wherein said second group constitutes at least 30 percent of a total cross-sectional area of the fibre tows (142), for example at least 35 percent, for example at least 40 percent, such as at least 45 percent.

7. A wind turbine blade spar cap according to any of the preceding claims, wherein said fibre tows (142) form part of a pultruded element of said wind turbine blade spar cap (134).

8. A wind turbine blade spar cap according to any of the preceding claims, wherein all of said fibre tows (142) have the same total cross-sectional area.

9. A wind turbine blade spar cap according to any of the preceding claims, wherein the fibre tows (142) are carbon tows, and the first filaments (146) are carbon filaments and the second filaments (148) are carbon filaments.

10. A method for manufacturing a wind turbine blade spar cap, (134) according to any of the previous claims, said method comprising the steps of:
transferring a liquid through a first set of nozzle apertures (156) to form a first group of filaments (146) and through a second set of nozzle apertures (160) to form a second group of filaments (148), wherein each of the nozzle apertures of said first set have first cross-sectional openings (158), and each of the nozzle apertures of said second set have second cross-sectional openings (162), wherein the first and second cross-sectional openings are differently sized and/or differently shaped;
processing said first group of filaments and said second group of filaments to form a first group of filaments and a second group of filaments;
bundling said first group and said second group of filaments to form a fibre tow (142) comprising said first group and said second group of filaments, wherein filaments of said first group and said second group are longitudinally aligned; and
integrating said fibre tow in a resin structure of said wind turbine blade spar cap.

11. A method according to claim 10, wherein said processing step comprises heating said first group of filaments and said second group of filaments to obtain different degrees of carbonization for the filaments (146) of said first group and the filaments (148) of said second group, respectively.

12. A method according to claim 11, wherein said first group of filaments and said second group of filaments are subjected to the same temperature during said processing step.

13. A method according to any of claims 10 - 12, wherein each of said first cross-sectional openings (158) defines a first cross-sectional area, and said second cross-sectional-openings (162) defines a second cross-sectional area, wherein the first cross-sectional area is larger than the second cross-sectional area.

14. A method according to any of claims 10-13, wherein said first set and said second sets of nozzle apertures (156, 160) are disposed in a nozzle head (154), wherein said second set constitutes at least 30 percent of a total opening area of said first cross-sectional openings and said second cross-sectional openings, for example at least 35 percent, for example at least 40 percent, such as at least 45 percent.

15. A method according to any of claims 10-14, wherein said first set (156) constitutes at least 30 percent of said total opening area, for example at least 35 percent, for example at least 40 percent, such as at least 45 percent.

16. A method according to any of claims 10-15, wherein the fibre tow (142) is a carbon tow, and the first group of filaments are carbon filaments and the second group of filaments are carbon filaments.

17. A method according to any of claims 10-16 wherein said wind turbine blade spar cap (134) is the wind turbine blade spar cap according to any of claims 1-9.

18. Use of at least one fibre tow (142) for balancing compressive and tensile properties in a wind turbine blade spar cap (134), wherein said at least one fibre tow comprises a first group of longitudinally aligned filaments (146), each of which has a first cross section (150), and a second group of longitudinally aligned filaments (148), each of which has a second cross section (152), wherein the first cross section is different from the second cross section.

19. Use of a first group of longitudinally aligned filaments (146) and a second group of longitudinally aligned filaments (148) in a fibre tow (142) in a resin structure of a wind turbine blade spar cap (134) for reducing filament gaps between filaments of said fibre tow,
wherein filaments of said first group individually have first cross sections (150) and filaments of said second group individually have second cross sections (152), wherein said first cross sections are different from said second cross sections.

## Patentansprüche

1. Gurt (134) für ein Windkraftanlagenblatt, umfassend eine faserverstärkte Harzstruktur, die Faserkabel (142) umfasst, wobei mindestens einige dieser Faserkabel Folgendes umfassen:
eine erste Gruppe von längs ausgerichteten ersten Filamenten (146), von denen jedes einen ersten Querschnitt (150) definiert; und
eine zweite Gruppe von längs ausgerichteten zweiten Filamenten (148), von denen jedes einen zweiten Querschnitt (152) definiert,
wobei sich der erste Querschnitt (150) vom zweiten Querschnitt (152) unterscheidet.

2. Gurt für ein Windkraftanlagenblatt nach Anspruch 1, wobei der erste Querschnitt (150) eine erste Querschnittsfläche definiert und wobei der zweite Querschnitt (152) eine zweite Querschnittsfläche definiert, wobei die erste Querschnittsfläche größer als die zweite Querschnittsfläche ist.

3. Gurt für ein Windkraftanlagenblatt nach Anspruch 1 oder 2, wobei die erste Querschnittsfläche beispielsweise 50 Quadratmikrometer bis 200 Quadratmikrometer, beispielsweise 55 Quadratmikrometer bis 100 Quadratmikrometer, beispielsweise 60 Quadratmikrometer bis 120 Quadratmikrometer, und die zweite Querschnittsfläche beispielsweise 10 Quadratmikrometer bis 50 Quadratmikrometer, beispielsweise 20 Quadratmikrometer bis 45 Quadratmikrometer, beispielsweise 30 Quadratmikrometer bis 40 Quadratmikrometer, beträgt.

4. Gurt für ein Windkraftanlagenblatt nach einem der vorstehenden Ansprüche, wobei der erste Querschnitt (150) eine erste Querschnittsform definiert, wobei der zweite Querschnitt (152) eine zweite Querschnittsform definiert, wobei sich die erste Querschnittsform von der zweiten Querschnittsform unterscheidet.

5. Gurt für ein Windkraftanlagenblatt nach einem der vorstehenden Ansprüche, wobei die erste Gruppe mindestens 30 Prozent einer Gesamtquerschnittsfläche der Faserkabel (142) ausmacht, beispielsweise mindestens 35 Prozent, beispielsweise mindestens 40 Prozent, beispielsweise mindestens 45 Prozent.

6. Gurt für ein Windkraftanlagenblatt nach einem der vorstehenden Ansprüche, wobei die zweite Gruppe mindestens 30 Prozent einer Gesamtquerschnittsfläche der Faserkabel (142) ausmacht, beispielsweise mindestens 35 Prozent, beispielsweise mindestens 40 Prozent, beispielsweise mindestens 45 Prozent.

7. Gurt für ein Windkraftanlagenblatt nach einem der vorstehenden Ansprüche, wobei die Faserkabel (142) Bestandteil eines pultrudierten Elements des Gurts (134) für ein Windkraftanlagenblatt sind.

8. Gurt für ein Windkraftanlagenblatt nach einem der vorstehenden Ansprüche, wobei alle Faserkabel (142) die gleiche Gesamtquerschnittsfläche aufweisen.

9. Gurt für ein Windkraftanlagenblatt nach einem der vorstehenden Ansprüche, wobei die Faserkabel (142) Kohlenstoffkabel sind und die ersten Filamente (146) Kohlenstofffilamente und die zweiten Filamente (148) Kohlenstofffilamente sind.

10. Verfahren zur Herstellung eines Gurts (134) für ein Windkraftanlagenblatt nach einem der vorstehenden Ansprüche, wobei das Verfahren die folgenden Schritte umfasst:
Leiten einer Flüssigkeit durch eine erste Gruppe von Düsenöffnungen (156), um eine erste Gruppe von Filamenten (146) zu bilden, und durch eine zweite Gruppe von Düsenöffnungen (160), um eine zweite Gruppe von Filamenten (148) zu bilden, wobei jede Düsenöffnung der ersten Gruppe erste Querschnittsöffnungen (158) und jede Düsenöffnung der zweiten Gruppe zweite Querschnittsöffnungen (162) aufweist, wobei die erste und die zweite Querschnittsöffnung unterschiedlich groß und/oder unterschiedlich geformt sind;
Verarbeiten der ersten Gruppe von Filamenten und der zweiten Gruppe von Filamenten zum Bilden einer ersten Gruppe von Filamenten und einer zweiten Gruppe von Filamenten;
Bündeln der ersten und der zweiten Gruppe von Filamenten zu einem Faserkabel (142), das die erste und die zweite Gruppe von Filamenten umfasst, wobei die Filamente der ersten und der zweiten Gruppe in Längsrichtung ausgerichtet sind; und
Integrieren des Faserkabels in eine Harzstruktur des Gurts für ein Windkraftanlagenblatt.

11. Verfahren nach Anspruch 10, wobei der Verarbeitungsschritt Erhitzen der ersten Gruppe von Filamenten und der zweiten Gruppe von Filamenten umfasst, um unterschiedliche Karbonisierungsgrade für die Filamente (146) der ersten Gruppe bzw. die Filamente (148) der zweiten Gruppe zu erzielen.

12. Verfahren nach Anspruch 11, wobei die erste Gruppe von Filamenten und die zweite Gruppe von Filamenten während des Verarbeitungsschritts der gleichen Temperatur ausgesetzt werden.

13. Verfahren nach einem der Ansprüche 10-12, wobei jede der ersten Querschnittsöffnungen (158) eine erste Querschnittsfläche definiert und die zweiten Querschnittsöffnungen (162) eine zweite Querschnittsfläche definieren, wobei die erste Querschnittsfläche größer als die zweite Querschnittsfläche ist.

14. Verfahren nach einem der Ansprüche 10-13, wobei die erste und die zweite Gruppe von Düsenöffnungen (156, 160) in einem Düsenkopf (154) angeordnet sind, wobei die zweite Gruppe mindestens 30 Prozent einer Gesamtöffnungsfläche der ersten und der zweiten Querschnittsöffnungen ausmacht, beispielsweise mindestens 35 Prozent, beispielsweise mindestens 40 Prozent, beispielsweise mindestens 45 Prozent.

15. Verfahren nach einem der Ansprüche 10-14, wobei die erste Gruppe (156) mindestens 30 Prozent der Gesamtöffnungsfläche ausmacht, beispielsweise mindestens 35 Prozent, beispielsweise mindestens 40 Prozent, beispielsweise mindestens 45 Prozent.

16. Verfahren nach einem der Ansprüche 10-15, wobei das Faserkabel (142) ein Kohlenstoffkabel ist und die ersten Gruppe von Filamenten Kohlenstofffilamente und die zweite Gruppe von Filamenten Kohlenstofffilamente sind.

17. Verfahren nach einem der Ansprüche 10-16, wobei der Gurt (134) für ein Windkraftanlagenblatt der Gurt für ein Windkraftanlagenblatt nach einem der Ansprüche 1-9 ist.

18. Verwendung mindestens eines Faserkabels (142) zum Ausgleich von Druck- und Zugeigenschaften in einem Gurt (134) für ein Windkraftanlagenblatt, wobei das mindestens eine Faserkabel eine erste Gruppe von längs ausgerichteten Filamenten (146) mit jeweils einem ersten Querschnitt (150) und eine zweite Gruppe von längs ausgerichteten Filamenten (148) mit jeweils einem zweiten Querschnitt (152) umfasst, wobei sich der erste Querschnitt vom zweiten Querschnitt unterscheidet.

19. Verwendung einer ersten Gruppe längs ausgerichteter Filamente (146) und einer zweiten Gruppe längs ausgerichteter Filamente (148) in einem Faserkabel (142) in einer Harzstruktur eines Gurts (134) für ein Windkraftanlagenblatt zum Verringern der Filamentlücken zwischen den Filamenten des Faserkabels,
wobei Filamente der ersten Gruppe jeweils einen ersten Querschnitt (150) aufweisen und Filamente der zweiten Gruppe jeweils einen zweiten Querschnitt (152) aufweisen, wobei sich die ersten Querschnitte von den zweiten Querschnitten unterscheiden.

## Revendications

1. Capuchon de longeron de pale d'éolienne (134) comprenant une structure en résine renforcée de fibres comprenant des câbles de fibres (142), dans lequel au moins certains desdits câbles de fibres comprennent :
un premier groupe de premiers filaments alignés longitudinalement (146), dont chacun définit une première section transversale (150) ; et
un second groupe de seconds filaments alignés longitudinalement (148), dont chacun définit une seconde section transversale (152),
dans lequel la première section transversale (150) est différente de la seconde section transversale (152).

2. Capuchon de longeron de pale d'éolienne selon la revendication 1, dans lequel ladite première section transversale (150) définit une première aire de section transversale, et dans lequel ladite seconde section transversale (152) définit une seconde aire de section transversale, dans lequel la première aire de section transversale est supérieure à la seconde aire de section transversale.

3. Capuchon de longeron de pale d'éolienne selon la revendication 1 ou 2, dans lequel la première aire de section transversale est comprise entre 50 micromètres carrés et 200 micromètres carrés, par exemple entre 55 micromètres carrés et 100 micromètres carrés, telle qu'entre 60 micromètres carrés et 120 micromètres carrés, et dans lequel la seconde aire de section transversale est comprise entre 10 micromètres carrés et 50 micromètres carrés, par exemple entre 20 micromètres carrés et 45 micromètres carrés, telle qu'entre 30 micromètres carrés et 40 micromètres carrés.

4. Capuchon de longeron de pale d'éolienne selon l'une quelconque des revendications précédentes, dans lequel ladite première section transversale (150) définit une première forme de section transversale, dans lequel ladite seconde section transversale (152) définit une seconde forme de section transversale, dans lequel la première forme de section transversale est différente de la seconde forme de section transversale.

5. Capuchon de longeron de pale d'éolienne selon l'une quelconque des revendications précédentes, dans lequel ledit premier groupe constitue au moins 30 pour cent de l'aire de section transversale totale des câbles de fibres (142), par exemple au moins 35 pour cent, par exemple au moins 40 pour cent, tel qu'au moins 45 pour cent.

6. Capuchon de longeron de pale d'éolienne selon l'une quelconque des revendications précédentes, dans lequel ledit second groupe constitue au moins 30 pour cent de l'aire de section transversale totale des câbles de fibres (142), par exemple au moins 35 pour cent, par exemple au moins 40 pour cent, tel qu'au moins 45 pour cent.

7. Capuchon de longeron de pale d'éolienne selon l'une quelconque des revendications précédentes, dans lequel lesdits câbles de fibres (142) font partie d'un élément pultrudé dudit capuchon de longeron de pale d'éolienne (134).

8. Capuchon de longeron de pale d'éolienne selon l'une quelconque des revendications précédentes, dans lequel tous lesdits câbles de fibres (142) présentent la même aire de section transversale totale.

9. Capuchon de longeron de pale d'éolienne selon l'une quelconque des revendications précédentes, dans lequel les câbles de fibres (142) sont des câbles de carbone, et les premiers filaments (146) sont des filaments de carbone et les seconds filaments (148) sont des filaments de carbone.

10. Procédé de fabrication d'un capuchon de longeron de pale d'éolienne (134) selon l'une quelconque des revendications précédentes, ledit procédé comprenant les étapes suivantes :
le transfert d'un liquide à travers un premier ensemble d'orifices de buse (156) pour former un premier groupe de filaments (146) et à travers un second ensemble d'orifices de buse (160) pour former un second groupe de filaments (148), dans lequel chacun des orifices de buse dudit premier ensemble présente des premières ouvertures de section transversale (158), et chacun des orifices de buse dudit second ensemble présente des secondes ouvertures de section transversale (162), dans lequel les premières et secondes ouvertures de section transversale sont de dimensions différentes et/ou de formes différentes ;
le traitement dudit premier groupe de filaments et dudit second groupe de filaments pour former un premier groupe de filaments et un second groupe de filaments ;
le regroupement dudit premier groupe et dudit second groupe de filaments pour former un câble de fibres (142) comprenant ledit premier groupe et ledit second groupe de filaments, dans lequel les filaments dudit premier groupe et dudit second groupe sont alignés longitudinalement ; et
l'intégration dudit câble de fibres dans une structure en résine dudit capuchon de longeron de pale d'éolienne.

11. Procédé selon la revendication 10, dans lequel ladite étape de traitement comprend le chauffage dudit premier groupe de filaments et dudit second groupe de filaments pour obtenir différents degrés de carbonisation respectivement pour les filaments (146) dudit premier groupe et les filaments (148) dudit second groupe.

12. Procédé selon la revendication 11, dans lequel ledit premier groupe de filaments et ledit second groupe de filaments sont soumis à la même température pendant ladite étape de traitement.

13. Procédé selon l'une quelconque des revendications 10-12, dans lequel chacune desdites premières ouvertures de section transversale (158) définit une première aire de section transversale et desdites secondes ouvertures de section transversale (162) définit une seconde aire de section transversale, dans lequel la première aire de section transversale est supérieure à la seconde aire de section transversale.

14. Procédé selon l'une quelconque des revendications 10-13, dans lequel ledit premier ensemble et ledit second ensemble d'orifices de buse (156, 160) sont disposés dans une tête de buse (154), dans lequel ledit second ensemble constitue au moins 30 pour cent d'une zone d'ouverture totale desdites premières ouvertures de section transversale et desdites secondes ouvertures de section transversale, par exemple au moins 35 pour cent, par exemple au moins 40 pour cent, tel qu'au moins 45 pour cent.

15. Procédé selon l'une quelconque des revendications 10-14, dans lequel ledit premier ensemble (156) constitue au moins 30 pour cent de ladite zone d'ouverture totale, par exemple au moins 35 pour cent, par exemple au moins 40 pour cent, tel qu'au moins 45 pour cent.

16. Procédé selon l'une quelconque des revendications 10-15, dans lequel le câble de fibres (142) est un câble de carbone, et le premier groupe de filaments sont des filaments de carbone et le second groupe de filaments sont des filaments de carbone.

17. Procédé selon l'une quelconque des revendications 10-16, dans lequel ledit capuchon de longeron de pale d'éolienne (134) est le capuchon de longeron de pale d'éolienne selon l'une quelconque des revendications 1-9.

18. Utilisation d'au moins un câble de fibres (142) pour équilibrer les propriétés de compression et de traction dans un capuchon de longeron de pale d'éolienne (134), dans laquelle ledit au moins un câble de fibres comprend un premier groupe de filaments alignés longitudinalement (146), dont chacun présente une première section transversale (150), et un second groupe de filaments alignés longitudinalement (148), dont chacun présente une seconde section transversale (152), dans laquelle la première section transversale est différente de la seconde section transversale.

19. Utilisation d'un premier groupe de filaments alignés longitudinalement (146) et d'un second groupe de filaments alignés longitudinalement (148) dans un câble de fibres (142) dans une structure en résine d'un capuchon de longeron de pale d'éolienne (134) pour réduire les espaces entre les filaments dudit câble de fibres,
dans laquelle les filaments dudit premier groupe présentent individuellement des premières sections transversales (150) et les filaments dudit second groupe présentent individuellement des secondes sections transversales (152), dans laquelle lesdites premières sections transversales sont différentes desdites secondes sections transversales.
